# EUROPÄISCHE PATENTANMELDUNG

(11) **EP 2 319 746 A2**
(43) Veröffentlichungstag der Anmeldung: **11.05.2011**
(21) Anmeldenummer: 10013872.6
(22) Anmeldetag: 21.10.2010
(51) Int. Cl.: B62D 25/08, B62D 29/00

(54) **Träger für einen Wärmetauscher eines Kraftwagens**

(30) Priorität: 05.11.2009 DE 102009052103
(71) Anmelder: Daimler AG, 70327 Stuttgart (DE)
(72) Erfinder: Maier, Hans-Peter, 72202 Nagold (DE); Rösch, Jochen, 71034 Böblingen (DE)

(57) **Zusammenfassung**

Die Erfindung betrifft einen Träger (10) für einen Wärmetauscher eines Kraftwagens, insbesondere eines Personenkraftwagens, mit einem im Wesentlichen U-förmigen, zwei Schenkel (14, 16) und einen Querschenkel (18) umfassenden Profilbauteil (12) aus einer Metalllegierung, welches zumindest partiell mit einem Kunststoff (24) versehen ist, wobei der Kunststoff (24) unter Bildung eines geschlossenen Rahmens eine Traverse (26) zwischen den zwei Schenkeln (14, 16) des Profilbauteils (12) ausbildet.

## Beschreibung

Die Erfindung betrifft einen Träger für einen Wärmetauscher eines Kraftwagens nach dem Oberbegriff von Patentanspruch 1.

Derartige Träger, die oftmals neben dem Wärmetauscher auch Leuchtenmodule und dergleichen des Wagens halten, sind dem Stand der Technik als allgemein bekannt zu entnehmen. Beispielsweise beschreibt die DE 694 03 051 T2 einen Träger für die Frontseite eines Kraftwagens mit einem U-förmigen, endseitig abgewinkelten Rohrprofil, an welches eine Frontplatte aus Kunststoff angespritzt ist. Das Rohrprofil ist dabei in der Frontplatte eingebettet. Die Frontplatte dient der Aufnahme von Leuchtenmodulen, von Motorventilatoren, des Motorhaubenschlosses, von Luftfiltern, Stoßfängern, Kühlergittern und dergleichen. Nachteiligerweise weist ein solcher Träger aufgrund der plattenförmigen Ausbildung des Kunststoffanteils ein relativ hohes Eigengewicht auf. Auch die Verwindungssteifigkeit eines solchen Trägers ist nicht optimal.

Der vorliegenden Erfindung liegt somit die Aufgabe zugrunde, einen Träger nach dem Oberbegriff von Patentanspruch 1 so weiterzubilden, dass eine besonders verwindungssteife, funktionell vielseitige und dennoch leichte Trägerkonstruktion geschaffen wird.

Diese Aufgabe wird durch einen Träger mit den Merkmalen des Patentanspruchs 1 gelöst.

Ein solcher Träger für einen Wärmetauscher eines Kraftwagens, insbesondere eines Personenkraftwagens, ist als Hybridbauteil ausgeführt und umfasst ein im Wesentlichen U-förmiges, zwei Schenkel und einen Querschenkel umfassendes Profilbauteil aus einer Metalllegierung, welches zumindest partiell mit einem Kunststoff versehen ist. Erfindungsgemäß ist vorgesehen, dass der Kunststoff unter Bildung eines geschlossenen Rahmens eine Traverse zwischen den beiden Schenkeln des Profilbauteils ausbildet. Somit wird ein Träger mit nur geringem Eigengewicht und aufgrund seiner rahmenförmigen Struktur dennoch hoher Verwindungssteifigkeit geschaffen. Der vom Rahmen umschlossene Bereich kann als Aufnahme für den Wärmetauscher dienen, so dass dieser möglichst ungehindert von Luft durchströmt werden kann.

Vorzugsweise bildet der Kunststoff hierbei einen Anbindungsbereich für den Wärmetauscher aus. Zusätzlich kann der Kunststoff auch eine Aufnahme für ein Leuchtenmodul ausbilden. Insgesamt wird so ein Träger realisiert, der bei sehr einfachem Aufbau und einfacher und damit kostengünstiger Herstellung eine Vielzahl von Funktionen integriert.

Das Profilbauteil selbst ist bevorzugt als innenhochdruckumgeformtes Metallrohr ausgebildet. Verglichen mit aus dem Stand der Technik bekannten geschweißten Metallkonstruktionen für solche Träger weist ein solches innenhochdruckumgeformtes Metallrohr eine besonders gute Festigkeit auf, da keinerlei Fügestellen vorhanden sind. Auch die Herstellung ist durch den Verzicht auf das Fügen mehrerer Einzelbauteile besonders einfach. Bei geschweißten Rohrkonstruktionen kann es darüber hinaus durch den Wärmeeintrag zu einem Verziehen der Konstruktion kommen, so dass die gewünschte Maßhaltigkeit oftmals nicht erreicht werden kann und gegebenenfalls durch aufwändige Richtmaßnahmen sichergestellt werden muss.

Vorzugsweise weist das Profilbauteil zumindest einen Anbindungsbereich zum Verbinden des Trägers mit einem Längsträger des Kraftwagens auf. Durch die Verbindung des metallischen Teils des als Hybridbauteil ausgeführten Trägers mit dem Längsträger des Kraftwagens wird auch bei einem Crash eine besonders gute Festigkeit des Trägers sichergestellt. Crashbedingt eingeleitete Kräfte können sicher vom Träger auf die Längsträger des Kraftwagens abgeleitet werden, so dass ein besonders sicheres Kraftfahrzeug geschaffen wird. Vorzugsweise weist das Profilbauteil Anbindungsbereiche sowohl für eine obere als auch für eine untere Längsträgerebene der Kraftwagenkarosserie auf, um so eine gleichmäßige Krafteinleitung in beide Längsträgerebenen sicherzustellen.

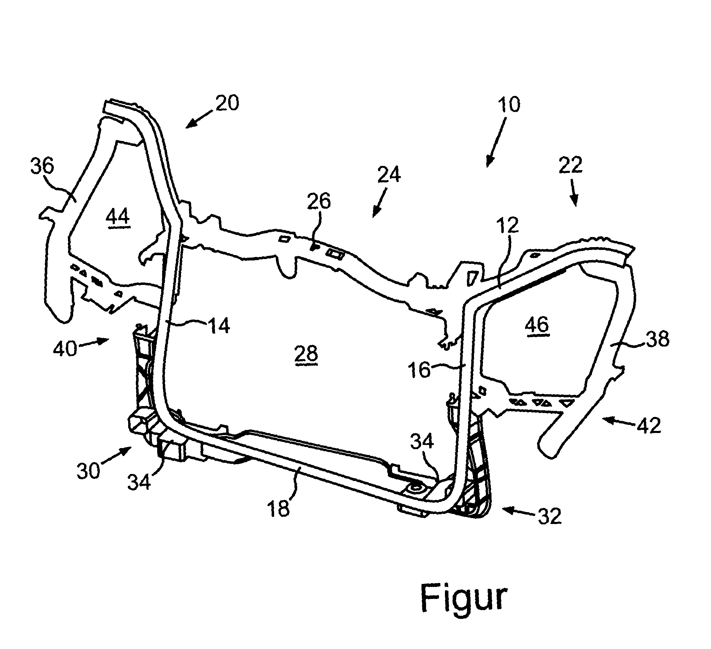

Im Folgenden soll die Erfindung und ihre Ausführungsformen anhand der Zeichnung näher erläutert werden. Die einzige Figur zeigt hierbei eine perspektivische Ansicht eines Ausführungsbeispiels eines erfindungsgemäßen Trägers.

Ein im Ganzen mit 10 bezeichneter Träger für einen Wärmetauscher eines Kraftwagens umfasst ein innenhochdruckumgeformtes Stahl- oder Aluminiumrohr 12. Dieses ist im Wesentlichen U-förmig aufgebaut und umfasst zwei Schenkel 14, 16, die über einen Querschenkel 18 verbunden sind. In ihren oberen Endbereichen 20, 22 sind die Schenkel 14, 16 seitlich abgekantet. An das innenhochdruckumgeformte Rohr 12 ist eine Kunststoffstruktur 24 angespritzt. Diese bildet eine Traverse 26 zwischen den Schenkeln 14 und 16 des Rohres 12 aus. Die Schenkel 14 und 16 bilden zusammen mit dem Querschenkel 18 und der Traverse 26 einen geschlossenen Rahmen, welcher eine Aufnahmeöffnung 28 für den Wärmetauscher umschließt. In den Übergangsbereichen 30, 32 zwischen dem Querschenkel 18 und den Schenkeln 14 beziehungsweise 16 bildet die Kunststoffstruktur 24 Anbindungsbereiche 34 zum Befestigen des Wärmetauschers aus. An die abgekanteten Endbereiche 20, 22 des innenhochdruckumgeformten Rohrs 12 schließen sich weitere angespritzte Kunststoffstrukturen 36, 38 an, die sich von den Endbereichen 20, 22 der Schenkel 14, 16 bis in Mittenbereiche 40, 42 der Schenkel 14, 16 erstrecken. Auch durch diese Kunststoffstrukturen 36, 38 werden geschlossene Rahmen gebildet, die Aufnahmen 44, 46 für Leuchtenmodule ausbilden.

Die Endbereiche 20, 22 des Rohres 12 dienen weiterhin als Anbindungspunkte für den Träger 10 an eine obere Längsträgerebene einer Kraftwagenkarosserie. In den Mittenbereichen 40, 42 der Schenkel 14, 16 kann das Rohr 12 an eine untere Längsträgerebene der Karosserie angebunden werden.

Die Herstellung eines derartigen Hybridträgers 10 ist besonders einfach, da die Kunststoffstruktur 24 bereits im Innenhochumformwerkzeug an das Rohr 12 angespritzt werden kann. Verglichen mit konventionellen Trägern lässt sich so eine besonders einfache Herstellung mit wenigen Arbeitschritten realisieren, mit der gleichzeitig ein besonders leichter Träger 10 geschaffen werden kann. Durch die Herstellung des Trägers 10 durch kombiniertes Innhochdruckumformen und Spritzguss ist gleichzeitig eine besonders flexible Gestaltung möglich, so dass der Träger 10 besonders leicht an Anforderungen bezüglich des Bauraums, der Steifigkeit, der Funktionalität und der Crashsicherheit angepasst werden kann.

## Patentansprüche

1. Träger (10) für einen Wärmetauscher eines Kraftwagens, insbesondere eines Personenkraftwagens, mit einem im Wesentlichen U-förmigen, zwei Schenkel (14, 16) und einen Querschenkel (18) umfassenden Profilbauteil (12) aus einer Metalllegierung, welches zumindest partiell mit einem Kunststoff (24) versehen ist, **dadurch gekennzeichnet, dass**
der Kunststoff (24) unter Bildung eines geschlossenen Rahmens eine Traverse (26) zwischen den zwei Schenkeln (14, 16) des Profilbauteils (12) ausbildet.

2. Träger (10) nach Anspruch 1,
**dadurch gekennzeichnet, dass**
der Kunststoff (24) einen Anbindungsbereich (34) für den Wärmetauscher ausbildet.

3. Träger (10) nach Anspruch 1 oder 2,
**dadurch gekennzeichnet, dass**
der Kunststoff (24) zumindest eine Aufnahme (44, 46) für ein Leuchtenmodul ausbildet.

4. Träger (10) nach einem der Ansprüche 1 bis 3,
**dadurch gekennzeichnet, dass**
das Profilbauteil (12) als innenhochdruckumgeformtes Metallrohr ausgebildet ist.

5. Träger (10) nach einem der Ansprüche 1 bis 4,
**dadurch gekennzeichnet, dass**
das Profilbauteil (12) zumindest einen Anbindungsbereich (20, 22, 40, 42) zum Verbinden des Trägers (10) mit wenigstens einem Längsträger des Kraftwagens aufweist.
